# EUROPEAN PATENT SPECIFICATION

(11) **EP 3 726 617 B1**
(45) Date of publication and mention of the grant of the patent: **08.01.2025**
(21) Application number: 17934863.6
(22) Date of filing: 13.12.2017
(51) Int. Cl.: H01M 50/152, H01M 50/167, H01M 50/342, H01M 50/578, H01M 10/0525

(54) **CYLINDRICAL LITHIUM ION SECONDARY BATTERY**
ZYLINDRISCHE LITHIUM-IONEN-SEKUNDÄRBATTERIE
ACCUMULATEUR LITHIUM-ION CYLINDRIQUE

(43) Date of publication of application: 21.10.2020
(73) Proprietor: Samsung SDI Co., Ltd., Gyeonggi-do 17084 (KR)
(72) Inventor: KIM, Dae Kyu, Yongin-si Gyeonggi-do 17084 (KR); CHUN, Byoung Min, Yongin-si Gyeonggi-do 17084 (KR); KIM, Shin Jung, Yongin-si Gyeonggi-do 17084 (KR); KO, Sung Gwi, Yongin-si Gyeonggi-do 17084 (KR)
(74) Representative: Marks & Clerk LLP
(86) International application number: PCT/KR2017/014616
(87) International publication number: WO 2019/117343

(56) References cited:
- EP-A1- 2 224 511
- JP-A- H08 153 510
- KR-A- 20080 055 229
- KR-A- 20100 125 951
- KR-A- 20150 120 136
- KR-A- 20170 012 138
- US-A1- 2016 087 318
- US-A1- 2017 133 645

## Description

### TECHNICAL FIELD

Various embodiments of the present invention relate to a cylindrical lithium ion secondary battery.

### BACKGROUND ART

Lithium ion secondary batteries are being widely used in portable electronic devices and power sources of hybrid automobiles or electric vehicles because of various advantages, including a high operation voltage, a high energy density per unit weight, and so forth.

The lithium ion secondary battery can be largely classified as a cylinder type secondary battery, a prismatic type secondary battery, a pouch type secondary battery. Specifically, the cylindrical lithium ion secondary battery generally includes a cylindrical electrode assembly, a cylindrical can coupled to the electrode assembly, an electrolyte injected into the can to allow movement of lithium ions, and a cap assembly coupled to one side of the can to prevent leakage of the electrolyte and separation of the electrode assembly.

EP 2224511 A1 relates to a rechargeable battery.

US 2016/087318 A1 relates to a rechargeable battery which has a heat-resistant insulating layer.

US 2017/133645 A1 relates to a cylindrical sealed battery and a battery pack including such a battery.

### DESCRIPTION OF EMBODIMENTS

### TECHNICAL PROBLEMS

Various embodiments of the present invention provide a cylindrical lithium ion secondary battery which, when an internal gas pressure is larger than a predetermined first reference pressure (operating pressure) and is smaller than a predetermined second reference pressure (breaking pressure) during overcharging, can maintain an internal sealing while a current path is blocked by a cap assembly.

Various embodiments of the present invention provide a cylindrical lithium ion secondary battery which can rapidly release the internal gas without any obstructions by allowing the cap assembly to be broken or ruptured (opened) when an internal gas pressure is larger than a predetermined second reference pressure (breaking pressure).

Various embodiments of the present invention provide a cylindrical lithium ion secondary battery which can arbitrarily determine the breaking pressure of the cap assembly according to the location of a welding region formed.

### SOLUTIONS TO PROBLEMS

According to various embodiments of the present invention, provided is a cylindrical lithium ion secondary battery comprising: a cylindrical can; an electrode assembly received in the cylindrical can; and a cap assembly for sealing the cylindrical can, wherein the cap assembly comprises a top plate having a flat surface on which a notch is formed, a middle plate coupled to the top plate and including a first through-hole formed through the center thereof, and a bottom plate electrically connected with the electrode assembly, attached to the middle plate with an insulating plate interposed therebetween, and connected to the top plate through the first through-hole of the middle plate.

The top plate may include a flat top surface and a flat bottom surface opposite to the top surface, and the notch is formed on the bottom surface.

The top plate may include a flat upper region positioned on the middle plate, a side region downwardly bent from the upper region and positioned at a side portion of the middle plate, and a lower region bent from the side region and positioned at a bottom portion of the middle plate.

The notch may be formed at an exterior side of a region corresponding to the first through-hole of the middle plate.

The middle plate may further include a plurality of second through-holes formed around the first through-hole.

When the internal gas pressure of the cylindrical can is larger than a predetermined first pressure and smaller than a predetermined second pressure, the top plate may be upwardly convexly deformed by the internal gas pressure, and the top plate may be electrically disconnected from the bottom plate.

When the internal gas pressure of the cylindrical can is larger than the predetermined second pressure, the notch may be broken, and the internal gas of the cylindrical can may then be released to the outside.

To determine the breaking pressure of the top plate, one or more welding regions may further be formed between the top plate and the middle plate.

As the welding regions formed are located far away from the edge of the top plate, the breaking pressure of the top plate may be relatively small.

### ADVANTAGEOUS EFFECTS OF INVENTION

As described above, in the cylindrical lithium ion secondary battery according to various embodiments, when an internal gas pressure is larger than a predetermined first reference pressure (operating pressure) and is smaller than a predetermined second reference pressure (breaking pressure), an internal sealing can be maintained while a current path is blocked by a cap assembly.

In the cylindrical lithium ion secondary battery according to various embodiments, the internal gas can be released to the outside without any obstructions by allowing the cap assembly to be broken or ruptured (opened) when the internal gas pressure, after a current path is blocked by the cap assembly, is larger than a predetermined second reference pressure (breaking pressure).

In the cylindrical lithium ion secondary battery according to various embodiments, the breaking pressure of the cap assembly can be arbitrarily determined according to the location of a welding region formed.

In the cylindrical lithium ion secondary battery according to various embodiments, a relatively large battery capacity can be achieved by making an upper end height of the cap assembly equal to or smaller than that of a cylindrical can.

The cylindrical lithium ion secondary battery according to various embodiments includes a cap assembly including relatively soft pure aluminum or an aluminum alloy, so that the cap assembly is easily broken (opened) when the internal gas pressure reaches a predetermined reference pressure, thereby improving the safety of battery.

### BRIEF DESCRIPTION OF DRAWINGS

FIGS. 1A and 1B are a perspective view and a cross-sectional view of a secondary battery according to various embodiments of the present invention, and FIG. 1C is an exploded perspective view illustrating only a cap assembly.
FIGS. 2A and 2B are cross-sectional views illustrating states in which the cap assembly operates and ruptures in the cylindrical secondary battery according to an embodiment of the present invention.
FIGS. 3A and 3B are cross-sectional views illustrating cap assemblies of the secondary battery according to various embodiments of the present invention.
FIGS. 4A and 4B are a cross-sectional view and a graph illustrating the relationship between breaking pressures/operating pressures and welding regions of the cap assembly in the cylindrical secondary battery according to various embodiments of the present invention.

### MODE OF INVENTION

Hereinafter, embodiments of the present invention will be described in detail.

The embodiments of the present invention, however, may be modified in many different forms and should not be construed as being limited to the example (or exemplary) embodiments set forth herein. Rather, these example embodiments are provided so that this invention will be thorough and complete and will convey the aspects and features of the present invention to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

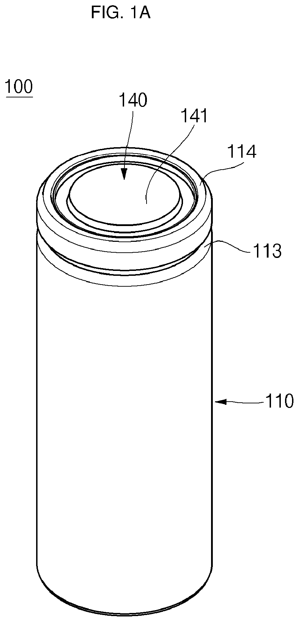

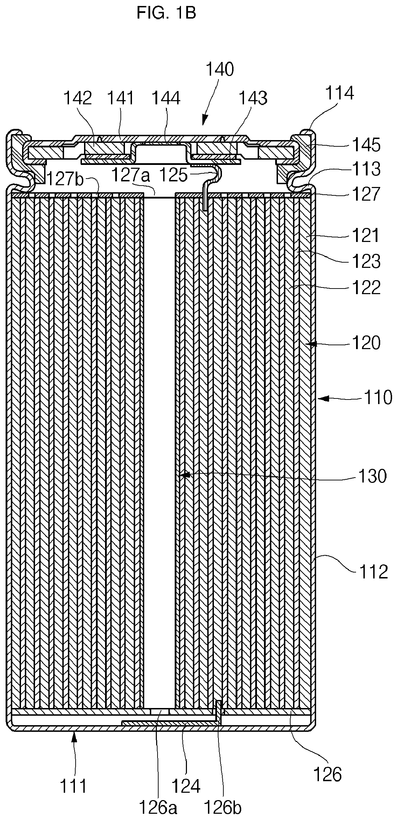

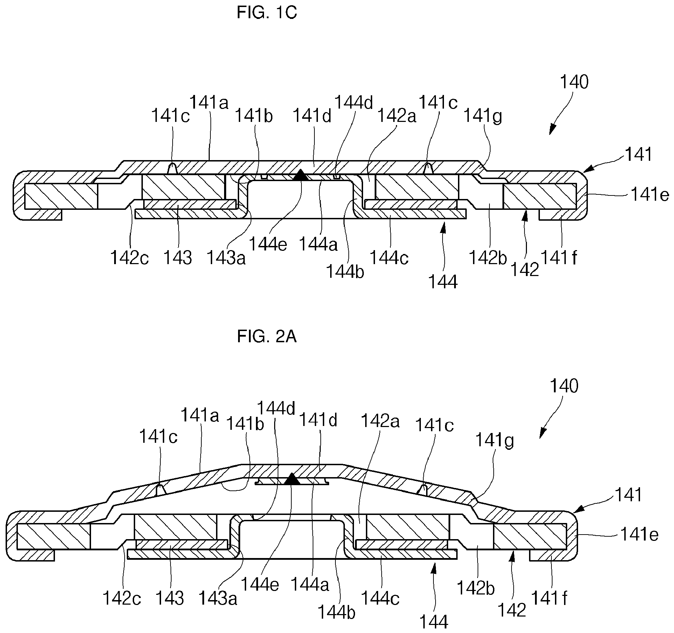

FIGS. 1A and 1B are a perspective view and a cross-sectional view of a cylindrical lithium ion secondary battery 100 according to various embodiments of the present invention, and FIG. 1C is an exploded perspective view illustrating only a cap assembly 140.

As illustrated in FIGS. 1A, 1B and 1C, the cylindrical lithium ion secondary battery 100 according to various embodiments may include a cylindrical can 110, an electrode assembly 120 and a cap assembly 140. In some cases, the cylindrical lithium ion secondary battery 100 may further include a center pin 130. In addition, in the cylindrical lithium ion secondary battery 100 according to various embodiments, the cap assembly 140 performs a current blocking operation, and thus may be referred to as a current interrupt device in some cases.

The cylindrical can 110 includes a circular bottom portion 111 and a side wall 112 upwardly extending a predetermined length from the periphery of the bottom portion 111. In the process of manufacturing the secondary battery, a top portion or top end of the cylindrical can 110 is left open. Therefore, in the process of assembling the secondary battery 100, the electrode assembly 120 and the center pin 130 may be inserted into the cylindrical can 110 together with an electrolyte. The cylindrical can 110 may be made of, for example, steel, a steel alloy, aluminum, an aluminum alloy, or an equivalent thereof, but embodiments of the present invention are not limited thereto.

In addition, the cylindrical can 110 may include an inwardly recessed beading part 113 formed below the cap assembly 140 so as to prevent the electrode assembly 120 from being separated from the cap assembly 140 and an inwardly bent crimping part 114 formed on or above the beading part 113.

The electrode assembly 120 is received in the cylindrical can 110. The electrode assembly 120 includes a negative electrode plate 121 coated with a negative electrode active material (e.g., graphite or carbon), a positive electrode plate 122 coated with a positive electrode active material (e.g., a transition metal oxide, such as LiCoO₂, LiNiO₂, or LiMn₂O₄), and a separator 123 interposed between the negative electrode plate 121 and the positive electrode plate 122 to prevent a short circuit between the negative electrode plate 121 and the positive electrode plate 122 while allowing only movement of lithium ions. The negative electrode plate 121, the positive electrode plate 122, and the separator 123 are wound in a substantially cylindrical shape or configuration. Here, the negative electrode plate 121 may be formed of a copper (Cu) or nickel (Ni) foil, the positive electrode plate 122 may be formed of an aluminum (Al) foil, and the separator 123 may be made of polyethylene (PE) or polypropylene (PP), but embodiments of the present invention are not limited thereto.

In addition, a negative electrode tab 124 may be welded to the negative electrode plate 121 to downwardly protrude and extend a predetermined length therefrom, and a positive electrode tab 125 may be welded to the positive electrode plate 122 to upwardly protrude and extend a predetermined length therefrom, or vice versa. In addition, the negative electrode tab 124 may be made of copper or nickel, and the positive electrode tab 125 may be made of aluminum, but embodiments of the present invention are not limited thereto.

In addition, the negative electrode tab 124 of the electrode assembly 120 may be welded to the bottom portion 111 of the cylindrical can 110. Therefore, the cylindrical can 110 may function as a negative electrode. In other embodiments, the positive electrode tab 125 may be welded to the bottom portion 111 of the cylindrical can 110. In these embodiments, the cylindrical can 110 may function as a positive electrode.

Additionally, a first insulating plate 126, which is coupled to the cylindrical can 110 and has a first hole 126a formed at its center and a second hole 126b formed around the first hole 126a, may be interposed between the electrode assembly 120 and the bottom portion 111 of the cylindrical can 110. The first insulating plate 126 may prevent the electrode assembly 120 from electrically contacting the bottom portion 111 of the cylindrical can 110. Specifically, the first insulating plate 126 prevents the positive electrode plate 122 of the electrode assembly 120 from electrically contacting the bottom portion 111. Here, when a relatively large amount of gas is generated due to an abnormality in the secondary battery, the first hole 126a allows the gas to rapidly move upwardly through the center pin 130, and the second hole 126b allows the negative electrode tab 124 to pass therethrough to be welded to the bottom portion 111.

In addition, a second insulating plate 127, which is coupled to the cylindrical can 110 and has a first hole 127a formed at its center and a plurality of second holes 127b formed around the first hole 127a, may be interposed between the electrode assembly 120 and the bottom portion 111 of the cylindrical can 110. The second insulating plate 127 may prevent the electrode assembly 120 from electrically contacting the bottom portion 111 of the cylindrical can 110. Specifically, the second insulating plate 127 prevents the negative electrode plate 121 of the electrode assembly 120 from electrically contacting the cap assembly 140. Here, when a relatively large amount of gas is generated due to an abnormality in the secondary battery, the first hole 127a allows the gas to rapidly move to the cap assembly 140, and the second hole 127b allows the positive electrode tab 125 to pass therethrough to be welded to the cap assembly 140. In addition, during injection of an electrolyte, the other second hole 127b allows the electrolyte to rapidly flow into the electrode assembly 120.

In addition, since diameters of the first holes 126a and 127a of the first and second insulating plates 126 and 127 are smaller than a diameter of the center pin 130, it is possible to prevent the center pin 130 from electrically contacting the bottom portion 111 of the cylindrical can 110 or the cap assembly 140 due to an external shock.

The center pin 130 is shaped of a hollow cylindrical pipe and is coupled to a substantially central portion of the electrode assembly 120. The center pin 130 may be made of steel, stainless steel, aluminum, an aluminum alloy, or polybutylene terephthalate, but embodiments of the present invention are not limited to the above materials. The center pin 130 prevents the electrode assembly 120 from being deformed during charging or discharging of the secondary battery, and may serve as a gas movement path. Of course, in some embodiments, the center pin 130 may not be provided.

The cap assembly 140 may include a top plate 141, a middle plate 142, an insulating plate 143 and a bottom plate 144.

The top plate 141 includes a substantially flat top surface 141a and a substantially flat bottom surface 141b opposite to the top surface 141 a. Particularly, the top plate 141 may further at least one notch 141c formed on the bottom surface 141b. Here, the notch 141c may have a substantially inverted V ("Λ") shaped cross section. In addition, when viewed from below, the notch 141c may have, for example, a substantially circular, elliptical or "C" shape, but embodiments of the present invention are not limited to the above shapes. The notch 141c is broken or ruptured when the internal gas pressure of the secondary battery is larger than a predetermined reference pressure, thereby rapidly releasing the internal gas of the battery to the outside and ultimately securing the safety of battery.

In addition, the top plate 141 may include an upper region 141d, a side region 141e, and a lower region 141f. The upper region 141d may be positioned on the middle plate 142 and may be substantially flat. The upper region 141d may serve as a terminal of the secondary battery, and thus may be electrically connected to an external device (e.g., a load or a charger). The side region 141e may be downwardly bent from the upper region 141d to substantially encompass a side portion of the middle plate 142. The lower region 141f is horizontally inwardly bent from the side region 141e to then be positioned at a bottom portion of the middle plate 142. In such a manner, the top plate 141 may be combined with the middle plate 142 by the upper region 141d, the side region 141e, and the lower region 141f.

Additionally, a height of the upper region 141d of the top plate 141 may be made to be equal to or smaller than that of the crimping part 114 of the cylindrical can 110, which increases the internal volume of the cylindrical can 110, thereby increasing the capacity of the secondary battery. Here, the height means a height ranging from the bottom portion 111 of the cylindrical can 110.

The top plate 141 may be made of, for example, aluminum, aluminum, an aluminum alloy or equivalents thereof, but embodiments of the present invention are not limited to the above materials. Accordingly, a bus bar, an external lead or an external device, made of aluminum, may be easily connected (or welded) to the top plate 141.

Here, the top plate 141 may be made of one selected from the group consisting of 1XXX series alloys, that is, pure aluminum of 99.0% or greater purity, 2XXX series alloys, that is, Al-Cu alloys, 3XXX series alloys, that is, Al-Mn alloys, 4XXX series alloys, that is, Al-Si alloys, 5XXX series alloys, that is, Al-Mg alloys, 6XXX series alloys, that is, Al-Mg-Si alloys, and 7XXX series alloys, that is, Al-Zn-(Mg, Cu) alloys.

Specifically, the top plate 141 is preferably made of soft aluminum among the above-mentioned series alloys. For example, the top plate 141 may be made of, but not limited to, a 5XXX series (e.g., 5052, 5056, 5083, or 5454) Al-Mg alloy having a high strength, excellent corrosion resistance and good weldability. Additionally, a 1XXX, 3XXX or 4XXX series alloy, which is a non-heat treatable alloy, may be used as a material of the top plate 141.

In some cases, the top plate 141 may further include a bent region 141g formed on the upper region 141d. When viewed from below, the bent region 141g may be shaped of a substantially circular ring. As an example, the upper region 141d located inside the bent region 141g may be positioned higher than the upper region 141d located outside the bent region 141g. In addition, the notch 141c may be formed on the upper region 141d located inside the bent region 141g.

The middle plate 142 may be positioned under the top plate 141 and may be substantially flat. In addition, the middle plate 142 may include a first through-hole 142a formed at a roughly central portion. Moreover, the middle plate 142 may include a plurality of second through-holes 142b formed around the first through-hole 142a.

Here, a bottom plate 144, which will later be described, may pass through the first through-hole 142a to then be electrically connected to the top plate 141, and may allow the internal gas pressure to be directly applied to the top plate 141. In addition, the second through-holes 142b may also allow the internal gas pressure to be directly applied to the top plate 141.

The notch 141c formed on the bottom surface 141b of the top plate 141 may be located to correspond to, for example, a region between the first through-hole 142a and each of the second through-holes 142b of the middle plate 142.

Additionally, the middle plate 142 may also include a bent region 142c formed on a region corresponding to the bent region 141g of the top plate 141. In addition, the second through-holes 142b may be formed in the bent region 142c. Therefore, the middle plate 142 may be generally configured such that it makes a close contact with the bottom surface 141b of the top plate 141.

The middle plate 142 may be made of, for example, aluminum, aluminum, an aluminum alloy or equivalents thereof, but embodiments of the present invention are not limited thereto.

The insulating plate 143 may be positioned under (attached to a bottom portion of) the middle plate 142 and may include a through-hole 143a located to correspond to the first through-hole 142a. When viewed from below, the insulating plate 143 may be shaped of a substantially circular ring having a predetermined width. As an example, the insulating plate 143 may be located to correspond to a region between the first through-hole 142a and each of the second through-holes 142b of the middle plate 142. In addition, the insulating plate 143 serves to insulate the middle plate 142 and the bottom plate 144 from each other. For example, the insulating plate 143 may be positioned between the middle plate 142 and the bottom plate 144 and may be subjected to ultrasonic welding, but embodiments of the present invention are not limited thereto.

The insulating plate 143 may be made of, for example, polyethylene (PE), polypropylene (PP), ethylene propylene diene monomer (M-class) rubber (EPDM rubber), or equivalents thereof, but embodiments of the present invention are not limited to the above materials. These insulating materials do not react with an electrolyte, and thus the insulating plate 143 may not be deformed even after the long-period use of the secondary battery 100.

The bottom plate 144 is electrically connected to the top plate 141 through the through-hole 143a of the insulating plate 143 and the first through-hole 142a of the middle plate 142 to then be attached to the insulating plate 143. That is to say, the bottom plate 144 may include a first area 144a connected (welded) to the upper region 141d of the top plate 141, a second area 144b bent from the first area 144a and passing through the through-hole 142a of the middle plate 142 and the through-hole 143a of the insulating plate 143, and a third area 144c substantially outwardly bent from the second area 144b and attached to the insulating plate 143. In FIG. 1C, undefined reference numeral 144e refers to a welding region in which the first area 144a of the bottom plate 144 is welded to the bottom surface 141b of the upper region 141d of the top plate 141.

Here, the positive electrode tab 125 may be electrically connected to the third area 144c of the bottom plate 144. In addition, the third area 144c is spaced apart from the middle plate 143 and is also spaced apart from the third region 141f of the top plate 141. In addition, the first area 144a of the bottom plate 144 may further include one or more concavely recessed grooves 144d. When the internal gas pressure of the battery is larger than a predetermined pressure, the top plate 141 is upwardly convexly deformed. In this case, the grooves 144d may serve to make the first area 144a of the bottom plate 144 easily separated from the second area 144b. Consequently, a current path between the top plate 141 and the bottom plate 144 may be blocked.

The bottom plate 144 may be made of, for example, aluminum, aluminum, an aluminum alloy or equivalents thereof, and thus the positive electrode tab 125 made of aluminum may be easily welded thereto.

The cap assembly 140 may further include an insulating gasket 145 insulating the top plate 141 and the sidewall 111 of the cylindrical can 110 from each other. Here, the insulating gasket 145 is configured to be substantially compressed between the beading part 113 and the crimping part 114 formed on the sidewall 111 of the cylindrical can 110. In addition, the insulating gasket 145 may substantially encompass the side region 141e of the top plate 141, and the top region 141d and the lower region 141g located therearound, thereby sealing the interior of the battery.

Additionally, an electrolyte (not shown) is injected into the cylindrical can 110, and lithium ions generated by an electrochemical reaction in the negative electrode plate 121 and the positive electrode plate 122 in the secondary battery during charging and discharging are allowed to move. The electrolyte may be a non-aqueous, organic electrolyte including a mixture of a lithium salt and a high-purity organic solvent. In addition, the electrolyte may be a polymer using a polymer electrolyte or a solid electrolyte. However, embodiments of the present invention are not limited to the above electrolytes.

With such features of the cap assembly 140, the cylindrical lithium ion secondary battery 100 according to the embodiment may have a relatively large capacity by making the upper end height of the cap assembly 140 equal to or smaller than that of the cylindrical can 110. In addition, the cylindrical lithium ion secondary battery 100 includes the cap assembly 140 including relatively soft pure aluminum or an aluminum alloy, so that the cap assembly 140 is easily broken or ruptured (opened) when the internal gas pressure reaches a predetermined reference pressure, thereby improving the safety of battery.

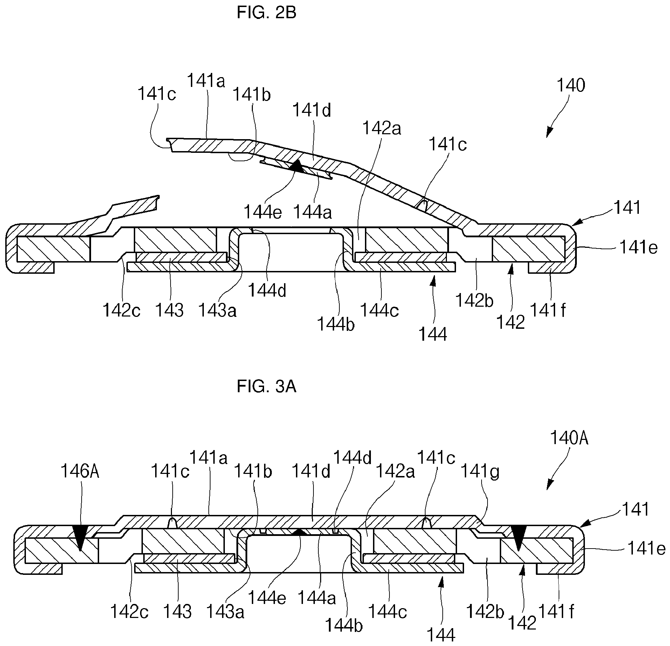

FIGS. 2A and 2B are cross-sectional views illustrating states in which the cap assembly 140 operates and ruptures in the cylindrical lithium ion secondary battery 100 according to an embodiment of the present invention.

As illustrated in FIG. 2A, in the cylindrical lithium ion secondary battery 100 according to various embodiments, when the internal gas pressure of the cylindrical can 110 is larger than a predetermined first reference pressure (operating pressure) and is smaller than a predetermined second reference pressure (breaking pressure), the top plate 141 is upwardly convexly deformed (inverted), and the top plate 141 may be electrically disconnected from the bottom plate 144. That is to say, the first area 144a of the bottom plate 144 is broken to then be separated from the second area 144b. In other words, the grooves 144d of the first area 144a are ruptured, and some regions of the first area 144a upwardly move in a state in which they are still connected to the top plate 141. Consequently, a current path between the top plate 141 and the bottom plate 144 may be blocked.

However, when the internal gas pressure of the secondary battery is smaller than the predetermined second reference pressure (breaking pressure), a sealing of the secondary battery may be maintained, thereby preventing the internal gas from being released to the outside.

When the battery is overcharged, when an internal short-circuit occurs to the cylindrical secondary battery due to penetration and/or collapse, or when an external short-circuit occurs to the battery, internal gas may be generated due to decomposition of an electrolyte and/or decomposition of an active material, resulting in an increase in the internal gas pressure of the secondary battery. Here, the secondary battery is designed such that the second reference pressure (breaking pressure) is larger than the first reference pressure (operating pressure). Such an increase in the internal gas pressure of the secondary battery may suggest that the secondary battery is at an abnormal state, and thus the current path is first blocked by the above-mentioned mechanical mechanism (charge current, discharge current, short-circuit current, or overcurrent), thereby improving the safety of the secondary battery.

As illustrated in FIG. 2B, in the cylindrical lithium ion secondary battery 100 according to various embodiments, when the internal gas pressure of the cylindrical can 110 is larger than the predetermined second pressure (breaking pressure), the top plate 141 is ruptured to thus rapidly release the internal gas without any obstructions. That is to say, as the notch 141c formed on the bottom surface 141b of the top plate 141 is ruptured, the gas existing within the secondary battery 100 is rapidly released to the outside, thereby preventing explosion of the secondary battery 100 and ultimately increasing the safety of the secondary battery 100. From the viewpoint of safety, releasing the internal gas to the outside in advance is more advantageous than letting the secondary battery 100 explode under a high pressure as described above.

In addition, the breaking pressure (or the second pressure) of the top plate 141 may be adjusted by the depth of the notch 141c formed. For example, the breaking pressure may be increased by forming the notch 141c so as to have a relatively small depth, and the breaking pressure may be reduced by forming the notch 141c so as to have a relatively large depth.

As described above, when the internal gas pressure is larger than the predetermined first reference pressure (operating pressure) and is smaller than the predetermined second reference pressure (breaking pressure), the cylindrical lithium ion secondary battery 100 according to the embodiments may primarily block the current path by the cap assembly 140. Here, the internal sealing of the battery is still maintained. In addition, when the internal gas pressure, after the current path is blocked by the cap assembly 140, is larger than the predetermined second reference pressure (breaking pressure), the cap assembly 140 is broken or ruptured (opened), and thus the cylindrical lithium ion secondary battery 100 according to the embodiments may secondly release the internal gas to the outside without any obstructions.

That is to say, the cylindrical lithium ion secondary battery 100 according to the embodiments may perform a safety-related operation in two steps by primarily blocking the current path when the internal gas pressure is larger than the predetermined first reference pressure, and secondly releasing the internal gas to the outside when the internal gas pressure is larger than the predetermined second reference pressure.

Meanwhile, the breaking pressure of the top plate 141 may be determined by a hinge point formed during operation (inversion) of the top plate 141 as well as by the depth of the notch 141c. That is to say, when the top plate 141 is inverted, there may be a hinge point at which the inversion is initiated. For example, the hinge point may be a boundary region between the insulating gasket 145 and the top plate 141. That is to say, the hinge point may be a region of the upper region 141d of the top plate 141, which corresponds to an end of the insulating gasket 145. Therefore, the breaking pressure of the top plate 141 may vary according to the location of the hinge point, which will be described below.

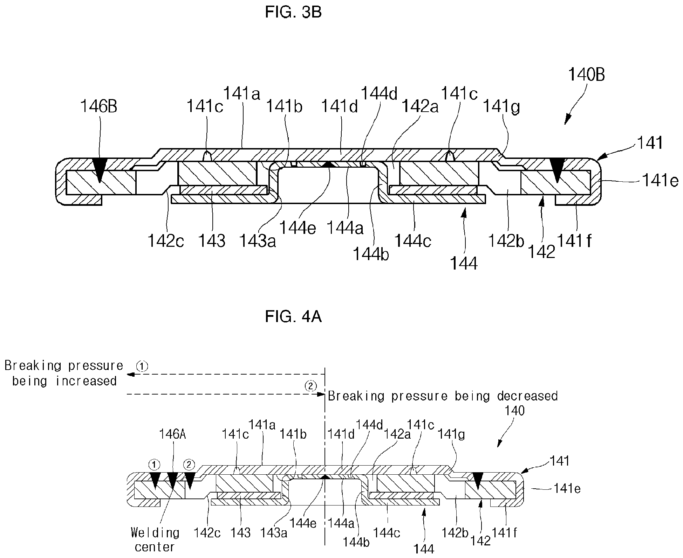

FIGS. 3A and 3B are cross-sectional views illustrating cap assemblies 140A and 140B of the cylindrical lithium ion secondary battery 100 according to various embodiments of the present invention.

As illustrated in FIGS. 3A and 3B, in the cylindrical lithium ion secondary battery 100 according to various embodiments, in order to determine (adjust) the breaking pressure of the top plate 141, the cap assemblies 140A and 140B may further include one or more welding regions 146A and 146B formed between the top plate 141 and the middle plate 142, respectively. The welding regions 146A and 146B may be formed by, for example, laser welding, resistance welding or ultrasonic welding, but embodiments of the present invention are not limited thereto. When viewed from above, for example, the welding regions 146A and 146B may be shaped such that substantially continuously circular rings or points are arranged, but embodiments of the present invention are not limited thereto. In addition, the welding regions 146A and 146B may be formed at regions near the edges of the top plate 141 and the middle plate 142, for example, but embodiments of the present invention are not limited thereto. That is to say, the welding regions 146A and 146B may be formed at regions of the top plate 141 and the middle plate 142, which correspond to a location between each of the second through-holes 142b of the middle plate 142 and the periphery of the middle plate 142, but embodiments of the present invention are not limited thereto.

Here, the breaking pressure of the top plate 141 may be gradually decreased as the welding regions 146A and 146B formed are getting far from the edge of the top plate 141. In other words, the breaking pressure of the top plate 141 may be gradually increased as the welding regions 146A and 146B formed are getting close to the edge of the top plate 141. Here, the breaking pressure means a pressure at which the notch 141c formed in the top plate 141 is broken or ruptured.

As an example, as illustrated in FIG. 3A, when the welding region 146A is located relatively far from the edge of the top plate 141 (that is, when the welding region 146A is located relatively close to the center of the top plate 141), the breaking pressure of the top plate 141 may be relatively small. That is to say, the notch 141c of the top plate 141 may be broken or ruptured by a relatively small internal pressure of the battery.

As another example, as illustrated in FIG. 3B, when the welding region 146B is located relatively close to the edge of the top plate 141 (that is, when the welding region 146B is located relatively far from the center of the top plate 141), the breaking pressure of the top plate 141 may be relatively large. That is to say, the notch 141c of the top plate 141 may be broken or ruptured by a relatively large internal pressure of the battery.

Such a change in the breaking pressure is attributable to a volumetric change for breaking.

In other words, the welding regions 146A and 146B may be considered to be hinge points, and the upper region 141d of the top plate 141 may be considered to be an inverted region.

As the welding regions 146A and 146B are getting close to the periphery of the top plate 141 (that is, getting far from the center), the volume for inverting the top plate 141 may be increased, and thus a relatively large internal pressure may be required for operating or breaking the top plate 141. Accordingly, the breaking pressure/operating pressure may be increased.

However, as the welding regions 146A and 146B are getting far from the periphery of the top plate 141 (that is, getting close to the center), the volume for inverting the top plate 141 may be decreased, and thus a relatively small internal pressure may be required for operating or breaking the top plate 141. Accordingly, the breaking pressure/operating pressure may be reduced.

That is, according to the present invention, the welding regions 146A and 146B, instead of contact boundary regions of the insulating gasket 145 and the top plate 141, are arbitrarily determined as the hinge points of the top plate 141, thereby allowing the secondary battery 100 to arbitrarily adjust the operating pressure and/or the breaking pressure of the top plate 141.

In addition, the operating pressure and/or the breaking pressure of the top plate 141 in any type of secondary battery may be uniformly controlled by adjusting the operating pressure and/or the breaking pressure of the top plate 141 using the welding regions 146A and 146B.

Practically, the breaking pressure and the operating pressure may be increased or decreased together.

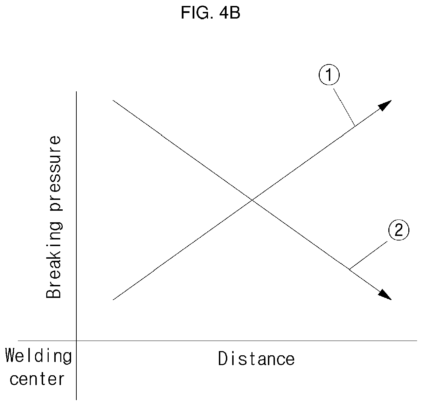

FIGS. 4A and 4B are a cross-sectional view and a graph illustrating the relationship between rupture pressures/operating pressures and welding regions of the cap assembly 140 in the cylindrical lithium ion secondary battery 100 according to various embodiments of the present invention. In FIG. 4B, the X-axis indicates the distance of a welding region from the center, and the Y-axis indicates the rupture pressure/operating pressure.

As illustrated in FIGS. 4A and 4B, the breaking pressure of a top plate is gradually increased away from the center of welding regions of the top plate toward the periphery of the top plate. In other words, as a welding region is formed to be closer to the periphery of the top plate, the pressure required for operating or breaking the top plate is increased. In still other words, as a welding region is formed to be closer to the center of the top plate, the pressure required for operating or breaking the top plate is decreased.

In addition, as illustrated in FIGS. 4A and 4B, the breaking pressure of the top plate is gradually decreased away from the center of welding regions of the top plate toward the center of the top plate. In other words, as the welding region is formed to be closer to the center of the top plate, the pressure required for operating or breaking the top plate is decreased. In still other words, as the welding region is formed to be closer to the periphery of the top plate, the pressure required for operating or breaking the top plate is increased.

Although the foregoing embodiments have been described to practice the cylindrical lithium ion secondary battery of the present invention, these embodiments are set forth for illustrative purposes and do not serve to limit the invention. Those skilled in the art will readily appreciate that many modifications and variations can be made, without departing from the scope of the invention as defined in the appended claims, and such modifications and variations are encompassed within the scope of the present invention.

## Claims

1. A cylindrical lithium ion secondary battery (100) comprising:
a cylindrical can (110); an electrode assembly (120) received in the cylindrical can (110); and
a cap assembly (140) for sealing the cylindrical can (110),
wherein the cap assembly (140) comprises a top plate (141) having a flat surface on which a notch (141c) is formed, a middle plate (142) coupled to the top plate (141) and including a first through-hole (142a) formed through the center thereof, and a bottom plate (144) electrically connected with the electrode assembly (120), attached to the middle plate (142) with an insulating plate (143) interposed therebetween, and connected to the top plate (141) through the first through-hole (142a) of the middle plate (142).

2. The cylindrical lithium ion secondary battery (100) of claim 1, wherein the top plate (141) includes a flat top surface (141a) and a flat bottom surface (141b) opposite to the top surface (141a), and the notch (141c) is formed on the bottom surface (141b).

3. The cylindrical lithium ion secondary battery (100) of claim 1, wherein the top plate (141) includes a flat upper region (141d) positioned on the middle plate (142), a side region (141e) downwardly bent from the upper region (141d) and positioned at a side portion of the middle plate (142), and a lower region (141f) bent from the side region (141e) and positioned at a bottom portion of the middle plate (142).

4. The cylindrical lithium ion secondary battery (100) of claim 1, wherein the notch (141c) is formed at an exterior side of a region corresponding to the first through-hole (142a) of the middle plate (142).

5. The cylindrical lithium ion secondary battery (100) of claim 1, wherein the middle plate (142) further includes a plurality of second through-holes (142b) formed around the first through-hole (142a).

6. The cylindrical lithium ion secondary battery (100) of claim 1, wherein the bottom plate (144) includes a first area (144a) connected to an upper region (141d) of the top plate (141), a second area (144b) bent from the first area (144a) and passing through the first through-hole (142a) of the middle plate (142) and a third area (144c) outwardly bent from the second area (144b) and attached to the insulating plate (143), the first area (144a) of the bottom plate (144) includes one or more grooves (144d), the one or more grooves (144d) are configured such that the first area (144a) of the bottom plate (144) is separated from the second area (144b) when the internal gas pressure of the cylindrical can (110) is larger than a predetermined first pressure and smaller than a predetermined second pressure and the top plate (141) is upwardly convexly deformed by the internal gas pressure, and as a result the top plate (140) is electrically disconnected from the bottom plate (144).

7. The cylindrical lithium ion secondary battery (100) of claim 6, wherein, the notch (141c) is configured to rupture when the internal gas pressure of the cylindrical can (110) is larger than the predetermined second pressure, and the internal gas of the cylindrical can (110) is then released to the outside.

8. The cylindrical lithium ion secondary battery (100) of claim 1, wherein one or more welding regions (146A, 146B) are further formed between the top plate (140) and the middle plate (142).

## Patentansprüche

1. Zylindrische Lithiumionen-Sekundärbatterie (100), die Folgendes umfasst:
einen zylindrischen Becher (110), eine Elektrodenbaugruppe (120), die in dem zylindrischen Becher (110) aufgenommen wird, und
eine Deckelbaugruppe (140) zum Abdichten des zylindrischen Bechers (110),
wobei die Deckelbaugruppe (140) eine obere Platte (141), die eine ebene Fläche, auf der eine Kerbe (141c) geformt ist, aufweist, eine mittlere Platte (142), die an die obere Platte (141) gekoppelt ist und ein erstes Durchgangsloch (142a) einschließt, das durch die Mitte derselben geformt ist, und eine untere Platte (144), die elektrisch mit der Elektrodenbaugruppe (120) verbunden ist, an der mittleren Platte (142) mit einer zwischen denselben eingefügten isolierenden Platte (143) befestigt ist und durch das erste Durchgangsloch (142a) der mittleren Platte (142) mit der oberen Platte (141) verbunden ist, umfasst.

2. Zylindrische Lithiumionen-Sekundärbatterie (100) nach Anspruch 1, wobei die obere Platte (141) eine ebene obere Fläche (141a) und eine ebene untere Fläche (141b), entgegengesetzt zu der oberen Fläche (141a), einschließt und die Kerbe (141c) auf der unteren Fläche (141b) geformt ist.

3. Zylindrische Lithiumionen-Sekundärbatterie (100) nach Anspruch 1, wobei die obere Platte (141) eine ebene obere Region (141d), die auf der mittleren Platte (142) angeordnet ist, eine seitliche Region (141e), die von der oberen Region (141d) aus nach unten gebogen und an einem seitlichen Abschnitt der mittleren Platte (142) angeordnet ist, und eine untere Region (141f), die von der seitlichen Region (141e) aus gebogen und an einem unteren Abschnitt der mittleren Platte (142) angeordnet ist, einschließt.

4. Zylindrische Lithiumionen-Sekundärbatterie (100) nach Anspruch 1, wobei die Kerbe (141c) an einer äußeren Seite einer Region geformt ist, die dem ersten Durchgangsloch (142a) der mittleren Platte (142) entspricht.

5. Zylindrische Lithiumionen-Sekundärbatterie (100) nach Anspruch 1, wobei die mittlere Platte (142) ferner eine Vielzahl von zweiten Durchgangslöchern (142b) einschließt, die um das erste Durchgangsloch (142a) geformt sind.

6. Zylindrische Lithiumionen-Sekundärbatterie (100) nach Anspruch 1, wobei die untere Platte (144) einen ersten Bereich (144a), der mit einer oberen Region (141d) der oberen Platte (141) verbunden ist, einen zweiten Bereich (144b), der von dem ersten Bereich (144a) aus gebogen ist und durch das erste Durchgangsloch (142a) der mittleren Platte (142) hindurchgeht, und einen dritten Bereich (144c), der von dem zweiten Bereich (144b) aus nach außen gebogen und an der isolierenden Platte (143) befestigt ist, einschließt, wobei der erste Bereich (144a) der unteren Platte (144) eine oder mehrere Rillen (144d) einschließt, wobei die eine oder die mehreren Rillen (144d) derart konfiguriert sind, dass der erste Bereich (144a) der unteren Platte (144) von dem zweiten Bereich (144b) getrennt ist, wenn der innere Gasdruck des zylindrischen Bechers (110) größer als ein vorbestimmter erster Druck und kleiner als ein vorbestimmter zweiter Druck ist, und die obere Platte (141) durch den inneren Gasdruck konvex nach oben verformt ist und im Ergebnis die obere Platte (140) elektrisch von der unteren Platte (144) getrennt ist.

7. Zylindrische Lithiumionen-Sekundärbatterie (100) nach Anspruch 6, wobei die Kerbe (141c) dafür konfiguriert ist, aufzureißen, wenn der innere Gasdruck des zylindrischen Bechers (110) größer als der vorbestimmte zweite Druck ist, und das innere Gas des zylindrischen Bechers (110) dann zur Außenseite freigesetzt wird.

8. Zylindrische Lithiumionen-Sekundärbatterie (100) nach Anspruch 1, wobei eine oder mehrere Schweißregionen (146A, 146B) ferner zwischen der oberen Platte (140) und der mittleren Platte (142) geformt sind.

## Revendications

1. Batterie secondaire lithium-ion cylindrique (100) comprenant :
un boîtier cylindrique (110) ; un ensemble formant électrode (120) reçu dans le boîtier cylindrique (110) ; et
un ensemble formant capuchon (140) pour sceller le boîtier cylindrique (110),
dans laquelle l'ensemble formant capuchon (140) comprend une plaque de sommet (141) comportant une surface plane sur laquelle une encoche (141c) est formée, une plaque intermédiaire (142) couplée à la plaque de sommet (141) et incluant un premier trou traversant (142a) formé au travers de son centre, et une plaque de fond (144) connectée électriquement à l'ensemble formant électrode (120), liée à la plaque intermédiaire (142), une plaque isolante (143) étant interposée entre elles, et connectée à la plaque de sommet (141) par l'intermédiaire du premier trou traversant (142a) de la plaque intermédiaire (142).

2. Batterie secondaire lithium-ion cylindrique (100) selon la revendication 1, dans laquelle la plaque de sommet (141) inclut une surface de sommet plane (141a) et une surface de fond plane (141b) opposée à la surface de sommet (141a), et l'encoche (141c) est formée sur la surface de fond (141b).

3. Batterie secondaire lithium-ion cylindrique (100) selon la revendication 1, dans laquelle la plaque de sommet (141) inclut une région supérieure plane (141d) positionnée sur la plaque intermédiaire (142), une région latérale (141e) fléchie vers le bas depuis la région supérieure (141d) et positionnée au niveau d'une partie latérale de la plaque intermédiaire (142), et une région inférieure (141f) fléchie depuis la région latérale (141e) et positionnée au niveau d'une partie de fond de la plaque intermédiaire (142).

4. Batterie secondaire lithium-ion cylindrique (100) selon la revendication 1, dans laquelle l'encoche (141c) est formée au niveau d'un côté extérieur d'une région correspondant au premier trou traversant (142a) de la plaque intermédiaire (142).

5. Batterie secondaire lithium-ion cylindrique (100) selon la revendication 1, dans laquelle la plaque intermédiaire (142) inclut en outre une pluralité de seconds trous traversants (142b) formés autour du premier trou traversant (142a).

6. Batterie secondaire lithium-ion cylindrique (100) selon la revendication 1, dans laquelle la plaque de fond (144) inclut une première zone (144a) connectée à une région supérieure (141d) de la plaque de sommet (141), une deuxième zone (144b) fléchie depuis la première zone (144a) et passant au travers du premier trou traversant (142a) de la plaque intermédiaire (142), et une troisième zone (144c) fléchie vers l'extérieur depuis la deuxième zone (144b) et liée à la plaque isolante (143), la première zone (144a) de la plaque de fond (144) incluant une ou plusieurs rainures (144d), les une ou plusieurs rainures (144d) étant configurées de telle sorte que la première zone (144a) de la plaque de fond (144) soit séparée de la deuxième zone (144b) lorsque la pression de gaz interne du boîtier cylindrique (110) est supérieure à une première pression prédéterminée et inférieure à une seconde pression prédéterminée et que la plaque de sommet (141) est déformée de façon convexe vers le haut par la pression de gaz interne, et par conséquent, la plaque de sommet (140) est déconnectée électriquement de la plaque de fond (144).

7. Batterie secondaire lithium-ion cylindrique (100) selon la revendication 6, dans laquelle l'encoche (141c) est configurée pour être rompue lorsque la pression de gaz interne du boîtier cylindrique (110) est supérieure à la seconde pression prédéterminée, et le gaz interne du boîtier cylindrique (110) est alors libéré à l'extérieur.

8. Batterie secondaire lithium-ion cylindrique (100) selon la revendication 1, dans laquelle une ou plusieurs régions de soudage (146A, 146B) sont en outre formées entre la plaque de sommet (140) et la plaque intermédiaire (142).
